**Europäisches Patentamt**

(19) **European Patent Office**

**Office européen des brevets**

(11) Numéro de publication: **0 152 654**
**B1**

(12) **FASCICULE DE BREVET EUROPEEN**

(45) Date de publication du fascicule du brevet:
**17.02.88**

(21) Numéro de dépôt: **84201956.4**

(22) Date de dépôt: **28.12.84**

(51) Int. Cl.⁴: **E 04 F 15/022**

(54) Elément préfabriqué, particulièrement pour parquets.

(30) Priorité: **27.01.84 BE 6047919**

(43) Date de publication de la demande:
**28.08.85 Bulletin 85/35**

(45) Mention de la délivrance du brevet:
**17.02.88 Bulletin 88/7**

(84) Etats contractants désignés:
**AT CH DE FR GB IT LI LU NL SE**

(56) Documents cités:
**DE - A - 2 363 592**
**FR - A - 1 070 192**
**FR - A - 1 141 138**
**FR - A - 1 156 507**

(73) Titulaire: **Lassaux, Léon Paul, 115 rue des Trois Rois,**
**B-4300 Ans (BE)**

(72) Inventeur: **Lassaux, Léon Paul, 115 rue des Trois Rois,**
**B-4300 Ans (BE)**

(74) Mandataire: **Dellicour, Paul, 18/012 rue Fabry,**
**B-4000 Liege (BE)**

## Description

La présente invention concerne un élément préfabriqué, en particulier pour parquets, constitué de lames ou lamelles de bois juxtaposées collées sur un support.

Par le brevet DE-A-2363592 il est connu de réaliser des éléments de parquet préfabriqués à partir de lames de bois en forme de demi-cercles ou portions de cercles fixées sur un support, éléments qui doivent ensuite être assemblés entre eux à l'endroit de pose et collés sur celui-ci.

Par le brevet FR-A-1141138 on connaît aussi un procédé d'assemblage de lamelles de bois pour constituer un panneau, ce panneau étant finalement fixé à l'aide d'une colle ou matière similaire sur une chape.

Le brevet FR-A-1070192 décrit un panneau, notamment pour parquets, comportant des tronçons de lames, qui doivent être assemblés entre eux par des feuillures à section en équerre prévus sur leurs bords ou par rainures et languettes. Ces lames ainsi assemblées sont fixées sur une plaque isolante et l'élément ainsi réalisé doit être collé ou cloué sur l'endroit de pose.

Un autre revêtement préfabriqué est encore connu par le brevet FR-A-1156507. Les éléments, tels que lattes, carrelages ou autres, sont juxtaposés et collés sur un support discontinu, tel que du papier ajouré, et les assemblages préfabriqués sont mis en place après encollage de la surface à couvrir ou de la surface des suppports.

Ces divers parquets préfabriqués connus réclament un usinage précis et une main-d'œuvre spécialisée pour leur pose. Les éléments de parquet préfabriqués connus se présentent dans des dimensions relativement réduites, par exemple d'une longueur de côté de 0,50 m, et doivent être fixés sur la chape par collage ou clouage. Quand le support n'est pas du papier ou du tissu, il est relativement épais et rend les éléments préfabriqués peu maniables.

Pour remédier à ces divers inconvénients il a paru avantageux de créer un élément préfabriqué, entre autres pour parquets, constitué de lames ou lamelles de bois juxtaposées collées sur un support et caractérisé en ce que le support consiste en une plaque de 2 mm à 3 mm d'épaisseur présentant une certaine souplesse pour épouser les petites irrégularités d'une chape et constituée d'un mélange de fibres de bois dur, de colle et d'huile, pressé et cuit.

Ce mélange de fibres de bois dur, de colle et d'huile, pressé et cuit est connu sous le nom de Unalit.

Suivant l'invention, pour réaliser les éléments préfabriqués on découpe les lames ou lamelles de bois en vue de constituer le dessin choisi, on les place selon ce dessin sur une surface bien plane dans un calibre en un matériau ne travaillant pas, on étend de la colle sur les lames ou lamelles et on recouvre l'ensemble avec la plaque d'Unalit, éventuellement perforée.

Suivant l'invention la plaque d'Unalit est de dimensions inférieures au calibre utilisé.

La fixation des lamelles sur la plaque support est assurée par une pression ou un agrafage et suivant l'invention il est prévu une pression d'au moins 200 kg ou un agrafage en seize points environ au mètre carré.

Lorsque l'élément préfabriqué est réalisé, on laisse sécher la colle entre lamelles et support pendant au moins 24 heures avant de commencer la finition. Les éléments préfabriqués peuvent alors être poncés avec une ponceuse à bandes ou être poncés par le passage de papiers à grains de plus en plus fins ou, encore, être passés à la raboteuse et finis avec un ponçage uniquement à grains fins.'

Après leur finition les éléments préfabriqués sont traités avec une solution à base de solvant cellulosique et séchés avant la vitrification.

Des éléments de parquets suivant l'invention peuvent avoir une surface de 0,20 m$^2$ à 1 m$^2$. Ils peuvent aussi atteindre une longueur de, par exemple, 2,50 m. Le support présente une épaisseur de 2 mm à 3 mm.

Un avantage des éléments préfabriqués suivant l'invention consiste en ce qu'ils peuvent être placés par une main-d'œuvre non spécialisée, par exemple par l'utilisateur lui-même. En effet, aucun emboîtement n'est à faire, ni à la fabrication, ni au placement. Ils sont très maniables et se posent simplement sur n'importe quel sol, sans collage, clouage ou fixation d'aucune sorte; leur poids suffit à les maintenir sur le sol et ils épousent par leur souplesse toutes les irrégularités. Ils peuvent être aisément remplacés élément par élément en cas de dégradation, comme ils peuvent être enlevés simplement sans décollage, déclouage ou arrachage et posés sur un autre sol, dans l'immeuble ou dans un autre immeuble.

Grâce à de tels éléments préfabriqués on peut placer des parquets dans les hôpitaux, les homes, les administrations, les bureaux où les éléments préfabriqués connus ne pouvaient pratiquement être utilisés à cause de leur travail de pose.

Ces éléments préfabriqués isolants thermiques et phoniques principalement pour parquets, peuvent avantageusement être posés sur un ossature pour former une cloison ou peuvent aussi garnir des murs existants. Dans ce cas, on utilise avantageusement simplement du papier collant double face.

## Revendications

1. Elément préfabriqué, particulièrement pour parquets, constitué de lames ou lamelles de bois juxtaposées collées sur un support, caractérisé en ce que le support consiste en une plaque de 2 mm à 3 mm d'épaisseur présentant une certaine souplesse pour épouser les petites irrégularités d'une chape et constituée d'un mélange de fibres de bois dur, de colle et d'huile, pressé et cuit.

2. Elément préfabriqué selon la revendication 1, caractérisé en ce que la fixation des lames ou lamelles avec leur support est réalisée avec une pression d'au moins 200 kg.

3. Elément préfabriqué selon la revendication 1, caractérisé en ce que la fixation des lames ou lamelles avec leur support est réalisé par un agrafage en seize points environ au mètre carré.

**Patentansprüche**

1. Vorgefertigtes Element, insbesondere für Parkettfussböden, das aus nebeneinander angeordneten, auf einen Träger geklebten Holzplatten oder -streifen gebildet ist, dadurch gekennzeichnet, dass der Träger aus einer 2 bis 3 mm dicken Schicht gebildet ist, die, um die kleinen Unregelmässigkeiten eines Untergrundes auszugleichen, eine gewisse Nachgiebigkeit aufweist, und aus einem gepressten und abgerundeten Gemisch aus Hartholzfasern, Leim sowie Öl besteht.

2. Vorgefertigtes Element nach Anspruch 1, dadurch gekennzeichnet, dass die Fixierung der Platten oder Streifen auf ihrem Träger mit einem Druck von wenigstens 200 kg erfolgt ist.

3. Vorgefertigtes Element nach Anspruch 1, dadurch gekennzeichnet, dass die Fixierung der Platten oder Streifen auf ihrem Träger an etwa sechzehn Punkten pro Quadratmeter mittels Drahtklammerheftung erfolgt ist.

**Claims**

1. Prefabricated element especially for parquetry, comprising wooden boards or strips placed alongside each other and fixed on a supporting base with adhesive, characterised in that the supporting base consists of a sheet of 2 to 3 mm in thickness having a certain pliableness so that it is able to accommodate the small amounts of unevenness in a cover and consisting of a mixture of pressed and baked hardwood fibres, adhesive and oil.

2. Prefabricated element according to claim 1, characterised in that the boards or strips with their supporting base are fixed at a pressure of at least 200 kg.

3. Prefabricated element according to claim 1, characterised in that the boards or strips with their supporting base are fixed by means of clamping at approximately sixteen points per square metre.